# EUROPEAN PATENT APPLICATION

(11) **EP 4 564 910 A1**
(43) Date of publication of application: **04.06.2025**
(21) Application number: 23845399.7
(22) Date of filing: 19.07.2023
(51) Int. Cl.: H04W 36/00

(54) **METHOD AND APPARATUS FOR ACTIVATING/DEACTIVATING CELL, AND STORAGE MEDIUM**

(30) Priority: 29.07.2022 CN 202210911211
(71) Applicant: Datang Mobile Communications Equipment Co., Ltd., Beijing 100085 (CN)
(72) Inventor: CHEN, Li, Beijing 100085 (CN); BERTRAND, Pierre, Beijing 100085 (CN)
(74) Representative: Cabinet Nony
(86) International application number: PCT/CN2023/108111
(87) International publication number: WO 2024/022188

(57) **Abstract**

Provided in the embodiments of the present disclosure are a method and apparatus for activating/deactivating a cell, and a storage medium. The method comprises: according to a base-station configuration condition, a terminal determining whether to activate/deactivate a cell carrying an uplink control message and/or a cell associated with the cell carrying the uplink control message.

## Description

### CROSS-REFERENCES TO RELATED APPLICATIONS

The present application claims priority to Chinese patent application No. 202210911211.5 filed on July 29, 2022, entitled "Method and Apparatus for Activating/Deactivating Cell, and Storage Medium", which is hereby incorporated by reference in its entirety.

### FIELD

The present application relates to the field of communications, and in particular, to methods and apparatuses for activating/deactivating cell, and storage media.

### BACKGROUND

In the related art, a cell carrying an uplink control message generally may not be shut down because the cell needs to forward the uplink control message to an associated cell. In case that a network device shuts down the cell carrying the uplink control message, it is necessary to use a media access control-control element (MAC-CE) or radio resource control (RRC) message to deactivate all associated cells, and use explicit signaling to deactivate the cell carrying the uplink control message before shutting down the cell. In case that a network device starts or activates an associated cell, the network device must start and activate the cell carrying the uplink control message, and use explicit signaling to notify the terminal of the start of the cell carrying the uplink control message and the start of the associated cell.

The above solution has a high signaling overhead throughout the entire procedure, and due to the delay caused by the information transmission, the activation/deactivation of the cell and the subsequent start/shutdown time of the cell are very long, which may even cause that the cell carrying the uplink control message may not be shut down, and is not conducive to energy saving for base station and terminal.

### BRIEF SUMMARY

Embodiments of the present application provide methods and apparatuses for activating/deactivating cell, and storage media, to solve the problem of high energy consumption of base station and terminal in the related art.

Embodiments of the present application provide a method for activating/deactivating cell, performed by a terminal, including:
determining, based on a base station configured condition, if the terminal is allowed to activate/deactivate a cell carrying an uplink control message and/or a cell associated with the cell carrying the uplink control message.

In some embodiments, the base station configured condition includes one or more of the following:
indication of the terminal being allowed to activate/deactivate a target cell of one physical uplink control channel (PUCCH) group;
indication of the terminal being allowed to activate/deactivate target cells of all PUCCH groups;
indication of the terminal being allowed to activate/deactivate an associated cell of a cell carrying the uplink control message;
indication of the terminal being allowed to activate/deactivate a PUCCH secondary cell (PUCCH SCell);
indication of the terminal being allowed to activate/deactivate a PUCCH switching secondary cell (PUCCH sSCell); or,
indication of the terminal being allowed to activate/deactivate a PUCCH SCell and a PUCCH sSCell.

In some embodiments, determining, based on the base station configured condition includes, if the terminal is allowed to activate/deactivate the cell carrying the uplink control message and/or the cell associated with the cell carrying the uplink control message includes:
in case that the cell carrying the uplink control message is re-configured, determining that the cell carrying the uplink control message before reconfiguration is a deactivatable cell, and the cell carrying the uplink control message after reconfiguration is an activated cell; or,
in case that all SCells transmitting uplink control information (UCI) mapped to the cell carrying the uplink control message are in a deactivated state, determining that the cell carrying the uplink control message is a deactivatable cell; or,
in case that a PUCCH SCell is in a deactivated state, determining that a cell of a PUCCH sSCell corresponding to the PUCCH SCell is a deactivatable cell; or,
in case that a target timer associated with the cell carrying the uplink control message expires, determining that the cell carrying the uplink control message is a deactivatable cell.

In some embodiments, the method further includes:
deactivating the deactivatable cell.

In some embodiments, the method further includes:
determining that there is no subsequent information transmission on the deactivatable cell.

In some embodiments, deactivating the deactivatable cell includes stopping one or more of the following on the deactivatable cell:
transmitting a sounding reference signal (SRS);
transmitting channel state information (CSI);
transmitting uplink data;
transmitting uplink control information;
performing random access; or,
monitoring a physical downlink control channel (PDCCH).

In some embodiments, in case that the deactivatable cell is a primary cell of a secondary base station, and the terminal has no information transmission on other cells of the secondary base station except for the primary cell, setting a secondary cell group (SCG) as a deactivatable SCG.

In some embodiments, the method further includes:
deactivating the deactivatable SCG.

In some embodiments, deactivating the deactivatable SCG includes stopping one or more of the following on any cell of the deactivatable SCG:
transmitting a sounding reference signal (SRS);
transmitting channel state information (CSI);
transmitting uplink data;
transmitting uplink control information;
performing random access; or,
monitoring a physical downlink control channel (PDCCH).

In some embodiments, the method further includes:
in case that the target timer is running and the terminal determines that a network device configures to transmit UCI in a periodic manner on the cell associated with the cell carrying the uplink control message, stopping the target timer; or,
in case that the target timer is running and the terminal transmits UCI in an aperiodic manner, restarting the target timer; or,
in case that the target timer is running and the terminal determines that a network device configures to transmit UCI in a periodic manner, stopping the target timer; or,
in case that the target timer is running, the terminal determines that a network device does not configure to transmit UCI in a periodic manner, and the terminal transmits UCI in an aperiodic manner, restarting the target timer.

In some embodiments, the method further includes:
in case of determining that there is subsequent information transmission on the PUCCH sSCell, re-determining a cell of the PUCCH sSCell as an activated cell; and transmitting UCI that needs to be transmitted on the PUCCH SCell on the PUCCH sSCell.

In some embodiments, in case that the cell carrying the uplink control message is determined to be a deactivatable cell, the method further includes:
determining that the cell associated with the cell carrying the uplink control message is a deactivatable cell; or,
updating a mapping relationship of the cell associated with the cell carrying the uplink control message; or,
mapping the cell associated with the cell carrying the uplink control message to a configured grant primary cell of a current cell group.

In some embodiments, the cell associated with the cell carrying the uplink control message is a cell that has a mapping relationship with the cell carrying the uplink control message, and corresponding UCI is transmitted on the mapped cell carrying the uplink control message; and
the cell carrying the uplink control message includes one or more of the following:
the PSCell;
the PUCCH SCell; or,
the PUCCH sSCell.

Embodiments of the present application provide a method for activating/deactivating cell, performed by a network device, including:
in case that all terminals in a cell carrying an uplink control message deactivate the cell carrying the uplink control message, deactivating the cell carrying the uplink control message and/or a cell associated with the cell carrying the uplink control message.

In some embodiments, the method further includes:
transmitting a base station configured condition to a terminal, where the base station configured condition is used to indicate the terminal to determine if the terminal is allowed to activate/deactivate the cell carrying the uplink control message and/or the cell associated with the cell carrying the uplink control message.

In some embodiments, the base station configured condition includes one or more of the following:
indication of the terminal being allowed to activate/deactivate a target cell of one physical uplink control channel (PUCCH) group;
indication of the terminal being allowed to activate/deactivate target cells of all PUCCH groups;
indication of the terminal being allowed to activate/deactivate an associated cell of a cell carrying the uplink control message;
indication of the terminal being allowed to activate/deactivate a PUCCH secondary cell (PUCCH SCell);
indication of the terminal being allowed to activate/deactivate a PUCCH switching secondary cell (PUCCH sSCell); or,
indication of the terminal being allowed to activate/deactivate a PUCCH SCell and a PUCCH sSCell.

In some embodiments, deactivating the cell carrying the uplink control message and/or the cell associated with the cell carrying the uplink control message includes one or more of the following:
shutting down the cell carrying the uplink control message and/or the cell associated with the cell carrying the uplink control message;
reducing a transmission frequency of a common signal on the cell carrying the uplink control message and/or the cell associated with the cell carrying the uplink control message;
reducing a transmission frequency of a synchronization signal/physical broadcast channel (PBCH) block (SSB) on the cell carrying the uplink control message and/or the cell associated with the cell carrying the uplink control message;
transmitting a common signal on the cell carrying the uplink control message and/or the cell associated with the cell carrying the uplink control message at a maximum transmission period; or,
transmitting an SSB on the cell carrying the uplink control message and/or the cell associated with the cell carrying the uplink control message at a maximum transmission period.

Embodiments of the present application provide a terminal, including a memory, a transceiver, and a processor, where
the memory is used for storing a computer program; the transceiver is used for receiving and transmitting data under control of the processor; and the processor is used for reading the computer program in the memory and performing the following operations:
determining, based on a base station configured condition, if the terminal is allowed to activate/deactivate a cell carrying an uplink control message and/or a cell associated with the cell carrying the uplink control message.

In some embodiments, the base station configured condition includes one or more of the following:
indication of the terminal being allowed to activate/deactivate a target cell of one physical uplink control channel (PUCCH) group;
indication of the terminal being allowed to activate/deactivate target cells of all PUCCH groups;
indication of the terminal being allowed to activate/deactivate an associated cell of a cell carrying the uplink control message;
indication of the terminal being allowed to activate/deactivate a PUCCH secondary cell (PUCCH SCell);
indication of the terminal being allowed to activate/deactivate a PUCCH switching secondary cell (PUCCH sSCell); or,
indication of the terminal being allowed to activate/deactivate a PUCCH SCell and a PUCCH sSCell.

In some embodiments, determining, based on the base station configured condition, if the terminal is allowed to activate/deactivate the cell carrying the uplink control message and/or the cell associated with the cell carrying the uplink control message includes:
in case that the cell carrying the uplink control message is re-configured, determining that the cell carrying the uplink control message before reconfiguration is a deactivatable cell, and the cell carrying the uplink control message after reconfiguration is an activated cell; or,
in case that all SCells transmitting uplink control information (UCI) mapped to the cell carrying the uplink control message are in a deactivated state, determining that the cell carrying the uplink control message is a deactivatable cell; or,
in case that a PUCCH SCell is in a deactivated state, determining that a cell of a PUCCH sSCell corresponding to the PUCCH SCell is a deactivatable cell; or,
in case that a target timer associated with the cell carrying the uplink control message expires, determining that the cell carrying the uplink control message is a deactivatable cell.

In some embodiments, the processor is further used for reading the computer program in the memory and performing the following operations:
deactivating the deactivatable cell.

In some embodiments, the processor is further used for reading the computer program in the memory and performing the following operations:
determining that there is no subsequent information transmission on the deactivatable cell.

In some embodiments, deactivating the deactivatable cell includes stopping one or more of the following on the deactivatable cell:
transmitting a sounding reference signal (SRS);
transmitting channel state information (CSI);
transmitting uplink data;
transmitting uplink control information;
performing random access; or,
monitoring a physical downlink control channel (PDCCH).

In some embodiments, in case that the deactivatable cell is a primary cell of a secondary base station, and the terminal has no information transmission on other cells of the secondary base station except for the primary cell, setting a secondary cell group (SCG) as a deactivatable SCG.

In some embodiments, the processor is further used for reading the computer program in the memory and performing the following operations:
deactivating the deactivatable SCG.

In some embodiments, deactivating the deactivatable SCG includes stopping one or more of the following on any cell of the deactivatable SCG:
transmitting a sounding reference signal (SRS);
transmitting channel state information (CSI);
transmitting uplink data;
transmitting uplink control information;
performing random access; or,
monitoring a physical downlink control channel (PDCCH).

In some embodiments, the processor is further used for reading the computer program in the memory and performing the following operations:
in case that the target timer is running and the terminal determines that a network device configures to transmit UCI in a periodic manner on the cell associated with the cell carrying the uplink control message, stopping the target timer; or,
in case that the target timer is running and the terminal transmits UCI in an aperiodic manner, restarting the target timer; or,
in case that the target timer is running and the terminal determines that a network device configures to transmit UCI in a periodic manner, stopping the target timer; or,
in case that the target timer is running, the terminal determines that a network device does not configure to transmit UCI in a periodic manner, and the terminal transmits UCI in an aperiodic manner, restarting the target timer.

In some embodiments, the processor is further used for reading the computer program in the memory and performing the following operations:
in case of determining that there is subsequent information transmission on the PUCCH sSCell, re-determining a cell of the PUCCH sSCell as an activated cell; and transmitting UCI that needs to be transmitted on the PUCCH SCell on the PUCCH sSCell.

In some embodiments, in case that the cell carrying the uplink control message is determined to be a deactivatable cell, the processor is further configured for reading the computer program in the memory and performing the following operations:
determining that the cell associated with the cell carrying the uplink control message is a deactivatable cell; or,
updating a mapping relationship of the cell associated with the cell carrying the uplink control message; or,
mapping the cell associated with the cell carrying the uplink control message to a configured grant primary cell of a current cell group.

In some embodiments, the cell associated with the cell carrying the uplink control message is a cell that has a mapping relationship with the cell carrying the uplink control message, and corresponding UCI is transmitted on the mapped cell carrying the uplink control message; and
the cell carrying the uplink control message includes one or more of the following:
the PSCell;
the PUCCH SCell; or,
the PUCCH sSCell.

Embodiments of the present application provide a network device, including a memory, a transceiver, and a processor, where
the memory is used for storing a computer program; the transceiver is used for receiving and transmitting data under control of the processor; and the processor is used for reading the computer program in the memory and performing the following operations:
in case that all terminals in a cell carrying an uplink control message deactivate the cell carrying the uplink control message, deactivating the cell carrying the uplink control message and/or a cell associated with the cell carrying the uplink control message.

In some embodiments, the processor is further used for reading the computer program in the memory and performing the following operations:
transmitting a base station configured condition to a terminal, where the base station configured condition is used to indicate the terminal to determine if the terminal is allowed to activate/deactivate the cell carrying the uplink control message and/or the cell associated with the cell carrying the uplink control message.

In some embodiments, the base station configured condition includes one or more of the following:
indication of the terminal being allowed to activate/deactivate a target cell of one physical uplink control channel (PUCCH) group;
indication of the terminal being allowed to activate/deactivate target cells of all PUCCH groups;
indication of the terminal being allowed to activate/deactivate an associated cell of a cell carrying the uplink control message;
indication of the terminal being allowed to activate/deactivate a PUCCH secondary cell (PUCCH SCell);
indication of the terminal being allowed to activate/deactivate a PUCCH switching secondary cell (PUCCH sSCell); or,
indication of the terminal being allowed to activate/deactivate a PUCCH SCell and a PUCCH sSCell.

In some embodiments, deactivating the cell carrying the uplink control message and/or the cell associated with the cell carrying the uplink control message includes one or more of the following:
shutting down the cell carrying the uplink control message and/or the cell associated with the cell carrying the uplink control message;
reducing a transmission frequency of a common signal on the cell carrying the uplink control message and/or the cell associated with the cell carrying the uplink control message;
reducing a transmission frequency of a synchronization signal/physical broadcast channel (PBCH) block (SSB) on the cell carrying the uplink control message and/or the cell associated with the cell carrying the uplink control message;
transmitting a common signal on the cell carrying the uplink control message and/or the cell associated with the cell carrying the uplink control message at a maximum transmission period; or,
transmitting an SSB on the cell carrying the uplink control message and/or the cell associated with the cell carrying the uplink control message at a maximum transmission period.

Embodiments of the present application provide an apparatus for activating/deactivating cell, used in a terminal, including:
a determining module, used for determining, based on a base station configured condition, if the terminal is allowed to activate/deactivate a cell carrying an uplink control message and/or a cell associated with the cell carrying the uplink control message.

In some embodiments, the base station configured condition includes one or more of the following:
indication of the terminal being allowed to activate/deactivate a target cell of one physical uplink control channel (PUCCH) group;
indication of the terminal being allowed to activate/deactivate target cells of all PUCCH groups;
indication of the terminal being allowed to activate/deactivate an associated cell of a cell carrying the uplink control message;
indication of the terminal being allowed to activate/deactivate a PUCCH secondary cell (PUCCH SCell);
indication of the terminal being allowed to activate/deactivate a PUCCH switching secondary cell (PUCCH sSCell); or,
indication of the terminal being allowed to activate/deactivate a PUCCH SCell and a PUCCH sSCell.

In some embodiments, the determining module is used for:
in case that the cell carrying the uplink control message is re-configured, determining that the cell carrying the uplink control message before reconfiguration is a deactivatable cell, and the cell carrying the uplink control message after reconfiguration is an activated cell; or,
in case that all SCells transmitting uplink control information (UCI) mapped to the cell carrying the uplink control message are in a deactivated state, determining that the cell carrying the uplink control message is a deactivatable cell; or,
in case that a PUCCH SCell is in a deactivated state, determining that a cell of a PUCCH sSCell corresponding to the PUCCH SCell is a deactivatable cell; or,
in case that a target timer associated with the cell carrying the uplink control message expires, determining that the cell carrying the uplink control message is a deactivatable cell.

In some embodiments, the apparatus further includes a first deactivating module, where the first deactivating module is used for deactivating the deactivatable cell.

In some embodiments, the apparatus further includes a first determining module, where the first determining module is used for determining that there is no subsequent information transmission on the deactivatable cell.

In some embodiments, the first deactivating module is used for stopping one or more of the following on the deactivatable cell:
transmitting a sounding reference signal (SRS);
transmitting channel state information (CSI);
transmitting uplink data;
transmitting uplink control information;
performing random access; or,
monitoring a physical downlink control channel (PDCCH).

In some embodiments, in case that the deactivatable cell is a primary cell of a secondary base station, and the terminal has no information transmission on other cells of the secondary base station except for the primary cell, the apparatus further includes a first setting module; and the first setting module is used for setting a secondary cell group (SCG) as a deactivatable SCG.

In some embodiments, the apparatus further includes a second deactivating module, where
the second deactivating module is used for deactivating the deactivatable SCG.

In some embodiments, the second deactivating module is used for stopping one or more of the following on any cell of the deactivatable SCG:
transmitting a sounding reference signal (SRS);
transmitting channel state information (CSI);
transmitting uplink data;
transmitting uplink control information;
performing random access; or,
monitoring a physical downlink control channel (PDCCH).

In some embodiments, the apparatus further includes a second processing module, where the second processing module is used for:
in case that the target timer is running and the terminal determines that a network device configures to transmit UCI in a periodic manner on the cell associated with the cell carrying the uplink control message, stopping the target timer; or,
in case that the target timer is running and the terminal transmits UCI in an aperiodic manner, restarting the target timer; or,
in case that the target timer is running and the terminal determines that a network device configures to transmit UCI in a periodic manner, stopping the target timer; or,
in case that the target timer is running, the terminal determines that a network device does not configure to transmit UCI in a periodic manner, and the terminal transmits UCI in an aperiodic manner, restarting the target timer.

In some embodiments, the apparatus further includes an updating module, where the updating module is used for:
in case of determining that there is subsequent information transmission on the PUCCH sSCell, re-determining a cell of the PUCCH sSCell as an activated cell; and transmitting UCI that needs to be transmitted on the PUCCH SCell on the PUCCH sSCell.

In some embodiments, in case that the cell carrying the uplink control message is determined to be a deactivatable cell, the apparatus further includes a third processing module, used for:
determining that the cell associated with the cell carrying the uplink control message is a deactivatable cell; or,
updating a mapping relationship of the cell associated with the cell carrying the uplink control message; or,
mapping the cell associated with the cell carrying the uplink control message to a configured grant primary cell of a current cell group.

In some embodiments, the cell associated with the cell carrying the uplink control message is a cell that has a mapping relationship with the cell carrying the uplink control message, and corresponding UCI is transmitted on the mapped cell carrying the uplink control message; and
the cell carrying the uplink control message includes one or more of the following:
the PSCell;
the PUCCH SCell; or,
the PUCCH sSCell.

Embodiments of the present application provide an apparatus for activating/deactivating cell, used in a network device, including a first processing module, where the first processing module is used for:
in case that all terminals in a cell carrying an uplink control message deactivate the cell carrying the uplink control message, deactivating the cell carrying the uplink control message and/or a cell associated with the cell carrying the uplink control message.

In some embodiments, the apparatus further includes a configuring module, where:
the configuring module is used for transmitting a base station configured condition to a terminal, where the base station configured condition is used to indicate the terminal to determine if the terminal is allowed to activate/deactivate the cell carrying the uplink control message and/or the cell associated with the cell carrying the uplink control message.

In some embodiments, the base station configured condition includes one or more of the following:
indication of the terminal being allowed to activate/deactivate a target cell of one physical uplink control channel (PUCCH) group;
indication of the terminal being allowed to activate/deactivate target cells of all PUCCH groups;
indication of the terminal being allowed to activate/deactivate an associated cell of a cell carrying the uplink control message;
indication of the terminal being allowed to activate/deactivate a PUCCH secondary cell (PUCCH SCell);
indication of the terminal being allowed to activate/deactivate a PUCCH switching secondary cell (PUCCH sSCell); or,
indication of the terminal being allowed to activate/deactivate a PUCCH SCell and a PUCCH sSCell.

In some embodiments, deactivating the cell carrying the uplink control message and/or the cell associated with the cell carrying the uplink control message includes one or more of the following:
shutting down the cell carrying the uplink control message and/or the cell associated with the cell carrying the uplink control message;
reducing a transmission frequency of a common signal on the cell carrying the uplink control message and/or the cell associated with the cell carrying the uplink control message;
reducing a transmission frequency of a synchronization signal/physical broadcast channel (PBCH) block (SSB) on the cell carrying the uplink control message and/or the cell associated with the cell carrying the uplink control message;
transmitting a common signal on the cell carrying the uplink control message and/or the cell associated with the cell carrying the uplink control message at a maximum transmission period; or,
transmitting an SSB on the cell carrying the uplink control message and/or the cell associated with the cell carrying the uplink control message at a maximum transmission period.

Embodiments of the present application further provide a processor-readable storage medium storing a computer program, where the computer program is used to cause a processor to perform any of the methods for activating/deactivating cell described above.

Embodiments of the present application further provide a computer-readable storage medium storing a computer program, where the computer program is used to cause a computer to perform any of the methods for activating/deactivating cell described above.

Embodiments of the present application further provide a communication device-readable storage medium storing a computer program, where the computer program is used to cause a communication device to perform any of the methods for activating/deactivating cell described above.

Embodiments of the present application further provide a chip product-readable storage medium storing a computer program, where the computer program is used to cause a chip product to perform any of the methods for activating/deactivating cell described above.

In the methods and apparatuses for activating/deactivating cell, and storage media provided in the embodiments of the present application, the terminal and the base station determine if the terminal and the base station is allowed to activate/deactivate the cell carrying the uplink control message and/or the cell associated with the cell carrying the uplink control message, without the need for explicit signaling to notify the terminal, which reduces signaling overhead, activates/deactivates the cell in a timely manner, and reduces energy consumption of the base station and the terminal.

### BRIEF DESCRIPTION OF THE DRAWINGS

To illustrate the solutions in the embodiments of the present application or the related art more clearly, the drawings used in the description of the embodiments or the related art are briefly described below. The drawings in the following description are only some embodiments of the present application, and other drawings may be obtained based on these drawings without any creative effort for those skilled in the art.
FIG. 1 is a schematic format diagram of a one-byte secondary cell (SCell) activation/deactivation media access control - control element (MAC-CE);
FIG. 2 is a schematic format diagram of a multi-byte SCell activation/deactivation MAC-CE;
FIG. 3 is a first flowchart of a method for activating/deactivating cell according to an embodiment of the present application;
FIG. 4 is a second flowchart of a method for activating/deactivating cell according to an embodiment of the present application;
FIG. 5 is a schematic structural diagram of a terminal according to an embodiment of the present application;
FIG. 6 is a schematic structural diagram of a network device according to an embodiment of the present application;
FIG. 7 is a first structural diagram of an apparatus for activating/deactivating cell according to an embodiment of the present application; and
FIG. 8 is a second structural diagram of an apparatus for activating/deactivating cell according to an embodiment of the present application.

### DETAILED DESCRIPTION

Energy consumption of the fifth generation mobile communication (5G) base station is a major issue in 5G systems, and is an important limiting factor for network deployment and operation by operators, and the spread of 5G systems. For energy conservation, a base station may shut down a cell, shut down a beam, shut down a certain frequency band, or shut down a transmitting and receiving unit during a certain time. Energy conservation at a cell level is an important part of base station energy conservation.

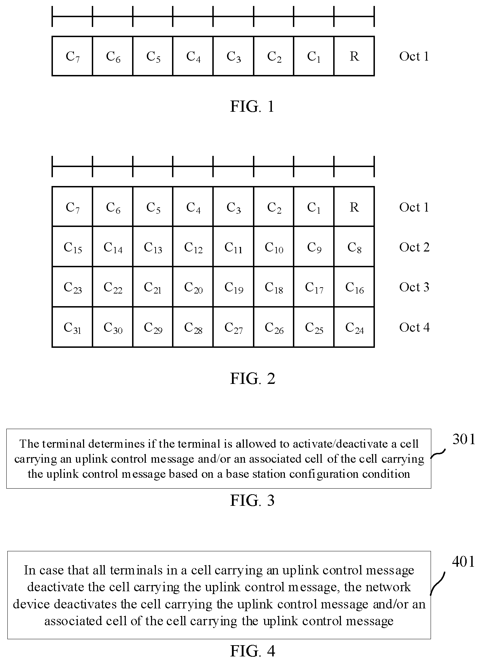

In the related art, the base station activates/deactivates a secondary cell (SCell) through the media access control (MAC) layer signaling and the SCell activation/deactivation MAC control unit (MAC-CE). The format of SCell activation/deactivation MAC-CE is shown in FIG. 1 and FIG. 2. FIG. 1 shows the format of a one-byte SCell activation/deactivation MAC-CE, corresponding to carrier aggregation (CA) of up to 8 cells under a base station (up to 7 SCells); FIG. 2 shows the format of a four-byte SCell activation/deactivation MAC-CE, corresponding to a maximum of 32 cell CAs (up to 31 SCells) under one base station. In case that the terminal receives the SCell activation/deactivation MAC-CE transmitted from the network device, at the corresponding Ci, and if the SCell corresponding to the SCell index (SCellIndex) is configured under the base station, the corresponding SCell is activated or deactivated based on the MAC-CE. Ci = 1 indicates activation, and Ci = 0 indicates deactivation.

In addition to the activation/deactivation of SCell, the related art further introduces the activation/deactivation of secondary cell group (SCG)/ secondary base station under dual connection (DC), which is indicated by a radio resource control (RRC) message.

In general, the start and shutdown of the activation/deactivation of SCells and secondary base stations is notified by the base station to the terminal, and especially, the deactivation of secondary base stations is notified by RRC signaling. This means that in case that a network device wants to shut down a cell, the network device must notify all terminals covered by that cell. This not only increases signaling overhead, but also prolongs the cell start time, which is not conducive to base station energy conservation.

Under CA, not all uplink carriers may transmit uplink control information (UCI). Except for the primary cell (PCell) or primary secondary cell (PSCell), one base station may be configured with up to one SCell to transmit UCI. SCells that may not transmit UCI may be mapped to PCell or physical uplink control channel (PUCCH) SCell. Based on this mapping relationship, the UCI generated by the SCell is transmitted on the corresponding PCell or PUCCH SCell.

In addition, the related art also introduces a physical uplink control channel switching secondary cell (PUCC sSCell) to replace PUCCH SCell in transmitting UCI. The use of PCell/PSCell/PUCCH SCell/PUCCH sSCell is configured by RRC signaling. The change from a primary cell or PUCCH SCell to a PUCCH sSCell may also be indicated through a physical downlink control channel (PDCCH). In this case, the PUCCH sSCell may only transmit a hybrid automatic repeat request (HARQ) feedback.

Explanation: UCI is carried on the PUCCH, and the cell carrying UCI and the cell containing PUCCH (or the cell transmitting PUCCH) are the same.

The cell carrying the uplink control message generally may not be shut down because the cell needs to transmit uplink messages for other associated cells. In case that a network device needs to shut down a cell carrying the uplink control message, it is necessary to deactivate all associated cells with MAC-CE or RRC messages, and deactivate the cell carrying the uplink control message with explicit signaling before shutting down the cell. In case that a network device need to start or activate other cells, the network device must start and activate the cell carrying the uplink control message, and use explicit signaling to notify the terminal of the start of the cell carrying the uplink control message and the start of other cells. This procedure incurs high signaling overhead, and due to the delay caused by the information transmission, both the activation/deactivation of the cell and the subsequent start /shutdown time of the cell are very long, which is not conducive to energy saving for the base station, and may even prevent the cell carrying the uplink control message from being shut down.

Based on the above problem, in the methods for activating/deactivating cell, the terminal and the base station determine if the terminal and the base station is allowed to activate/deactivate the cell carrying the uplink control message and/or the cell associated with the cell carrying the uplink control message, without the need for explicit signaling to notify the terminal, which reduces signaling overhead, activates/deactivates the cell in a timely manner, and reduces energy consumption of the base station and the terminal.

FIG. 3 is a first flowchart of a method for activating/deactivating cell according to an embodiment of the present application. As shown in FIG. 3, embodiments of the present application provide a method for activating/deactivating cell, which may be performed by a terminal, such as a mobile phone, etc. The method includes:
step 301: the terminal determines, based on a base station configured condition, if the terminal is allowed to activate/deactivate a cell carrying an uplink control message and/or a cell associated with the cell carrying the uplink control message.

In an embodiment, the terminal autonomously activating/deactivating based on the base station configured condition refers to that the terminal does not need to receive explicit signaling transmitted from the network device for the cell (such as SCell activation/deactivation MAC-CE in FIG. 1 and FIG. 2), and the terminal may autonomously determine to activate/deactivate a cell based on the base station configured condition.

In some embodiments, before determining, based on a base station configured condition, if the terminal is allowed to activate/deactivate a cell carrying an uplink control message and/or a cell associated with the cell carrying the uplink control message, the terminal receives the base station configured condition from the network device. It should be noted that the order of steps described here is only an example and is not limited to the order of examples in this embodiment.

In some embodiments, deactivating the cell includes stopping one or more of the following on the cell:
transmitting a sounding reference signal (SRS);
transmitting channel state information (CSI);
transmitting uplink data;
transmitting uplink control information;
performing random access; or,
monitoring a physical downlink control channel (PDCCH).

In an embodiment, the terminal deactivating a cell refers to the terminal does not perform one or more of the following operations on the cell: transmitting the SRS, reporting the CSI, transmitting the uplink data, transmitting the uplink control channel, performing the random access, monitoring the PDCCH of the cell, etc.

In some embodiments, the cell associated with the cell carrying the uplink control message is a cell that has a mapping relationship with the cell carrying the uplink control message, and corresponding UCI is transmitted on the mapped cell carrying the uplink control message.

The UCI includes CSI feedback, SRS, HARQ feedback, etc.

The cell carrying the uplink control message includes one or more of the following:
the PSCell;
the PUCCH SCell; or,
the PUCCH sSCell.

It should be noted that PCell may also carry uplink control messages, but may not be autonomously activated/deactivated by the terminal. Therefore, the cells carrying the uplink control message that may be autonomously activated/deactivated by the terminal do not include PCell.

In some embodiments, the base station configured condition includes one or more of the following:
indication of the terminal being allowed to activate/deactivate a target cell of one physical uplink control channel (PUCCH) group;
indication of the terminal being allowed to activate/deactivate target cells of all PUCCH groups;
indication of the terminal being allowed to activate/deactivate an associated cell of a cell carrying the uplink control message;
indication of the terminal being allowed to activate/deactivate a PUCCH secondary cell (PUCCH SCell);
indication of the terminal being allowed to activate/deactivate a PUCCH switching secondary cell (PUCCH sSCell); or,
indication of the terminal being allowed to activate/deactivate a PUCCH SCell and a PUCCH sSCell.

In an embodiment, the network device may indicate that the terminal is allowed to activate/deactivate one or more combinations of the target cell of one PUCCH group, the target cells of all PUCCH groups, the cell associated with the cell carrying the uplink control message, the PUCCH SCell, or the PUCCH sSCell.

In some embodiments, the method further includes:
deactivating the deactivatable cell.

In an embodiment, the terminal deactivating a cell may include two steps:
firstly, the terminal sets the cell that needs to be deactivated as a deactivatable cell; and
then, the terminal deactivates these deactivatable cells.

In some embodiments, the terminal may directly deactivate the cell.

In some embodiments, the terminal may determine whether there is subsequent information transmission on the cell, and if there is no subsequent information transmission on the cell, the terminal deactivates the cell.

In some embodiments, the method further includes:
determining that there is no subsequent information transmission on the deactivatable cell.

In an embodiment, the conditions for determining whether there is subsequent information transmission include whether there is subsequent service data transmission and/or control signaling transmission.

In some embodiments, the terminal determines that there is no subsequent information transmission on the deactivatable cell, including one or more of the following:
determining that there is no hybrid automatic repeat request (HARQ) retransmission on the deactivatable cell;
determining that the HARQ retransmission procedure on the deactivatable cell is completed; or,
determining that the target timer expires, where the target timer is started in case that the terminal determines that the deactivatable cell needs to be deactivated.

For example, if the terminal determines that there is no HARQ retransmission on the deactivatable cell, the terminal may determine that there is no subsequent information transmission on the deactivatable cell.

For example, if there is a HARQ retransmission on the cell, the terminal deactivates the cell after completing the retransmission of the HARQ procedure.

For example, in case that the terminal determines to deactivate the cell, the terminal starts timer T1. If there is no information transmission on the cell after the timer expires, the terminal deactivates the cell; if there is transmission, the terminal restarts the timer T1.

In some embodiments, in case that the deactivatable cell is a primary cell of a secondary base station, and the terminal has no information transmission on other cells of the secondary base station except for the primary cell, setting a secondary cell group (SCG) as a deactivatable SCG.

In some embodiments, the method further includes:
deactivating the deactivatable SCG.

In an embodiment, if the deactivated cell is the primary cell/ primary secondary cell (PSCell) of the secondary base station and the terminal has no information transmission on other cells under the secondary base station, the terminal sets the SCG as the deactivatable SCG and deactivates the SCG.

In some embodiments, deactivating the deactivatable SCG includes stopping one or more of the following on any cell of the deactivatable SCG:
transmitting a sounding reference signal (SRS);
transmitting channel state information (CSI);
transmitting uplink data;
transmitting uplink control information;
performing random access; or,
monitoring a physical downlink control channel (PDCCH).

In some embodiments, the terminal deactivating SCG refers to that the terminal stops one or more of the following operations on any cell of the deactivatable SCG: transmitting the SRS, reporting the CSI, transmitting the uplink data, transmitting the uplink control channel, performing the random access, or monitoring the PDCCH of the cell, etc.

In some embodiments, determining, based on the base station configured condition, if the terminal is allowed to activate/deactivate the cell carrying the uplink control message and/or the cell associated with the cell carrying the uplink control message includes:
in case that the cell carrying the uplink control message is re-configured, determining that the cell carrying the uplink control message before reconfiguration is a deactivatable cell, and the cell carrying the uplink control message after reconfiguration is an activated cell; or,
in case that all SCells transmitting uplink control information (UCI) mapped to the cell carrying the uplink control message are in a deactivated state, determining that the cell carrying the uplink control message is a deactivatable cell; or,
in case that a PUCCH SCell is in a deactivated state, determining that a cell of a PUCCH sSCell corresponding to the PUCCH SCell is a deactivatable cell; or,
in case that a target timer associated with the cell carrying the uplink control message expires, determining that the cell carrying the uplink control message is a deactivatable cell.

In an embodiment, in case that the cell carrying the uplink control message is re-configured, the terminal determines that the cell carrying the uplink control message before reconfiguration is a deactivatable cell, and the cell carrying the uplink control message after reconfiguration is an activated cell.

The terminal may also determine the cell of the PUCCH sSCell corresponding to the PUCCH SCell as a deactivatable cell in case that a PUCCH SCell is in a deactivated state.

The terminal may also configure a cell deactivation timer for PUCCH SCell/PUCCH sSCell (this timer may only be configured for SCell without PUCCH configuration in the related art). In case that the timer associated with the cell carrying the uplink control message expires, the terminal determines that the cell carrying the uplink control message is a deactivatable cell.

In some embodiments, the method further includes:
in case that the target timer is running and the terminal determines that a network device configures to transmit UCI in a periodic manner on the cell associated with the cell carrying the uplink control message, stopping the target timer; or,
in case that the target timer is running and the terminal transmits UCI in an aperiodic manner, restarting the target timer; or,
in case that the target timer is running and the terminal determines that a network device configures to transmit UCI in a periodic manner, stopping the target timer; or,
in case that the target timer is running, the terminal determines that a network device does not configure to transmit UCI in a periodic manner, and the terminal transmits UCI in an aperiodic manner, restarting the target timer.

In an embodiment, in case that the network device configures periodic UCI transmission (such as CSI, SRS) of the associated cell on the PUCCH SCell/PUCCH sSCell, the cell deactivation timer is stopped (or being referred to as that the PUCCH SCell/PUCCH sSCell configures cell deactivation timer as suspended).

If the timer does not stop/suspend, the timer is started in case of transmitting aperiodic UCI reports (such as HARQ feedback).

In case that the timer is running, if the base station configures a periodic UCI report, the timer is stopped.

In case that the timer is running, if periodic UCI report is not configured but aperiodic UCI report occurs, the timer is restarted.

After the timer expires, the terminal sets the PUCCH SCell/PUCCH sSCell as a deactivatable cell.

In some embodiments, the method further includes:
in case of determining that there is subsequent information transmission on the PUCCH sSCell, re-determining a cell of the PUCCH sSCell as an activated cell; and transmitting UCI that needs to be transmitted on the PUCCH SCell on the PUCCH sSCell.

In an embodiment, in case that the terminal determines that there is subsequent information transmission on the PUCCH sSCell, if the current cell of the PUCCH sSCell is in an inactive state, the terminal re-determines the cell of the PUCCH sSCell as an activated cell, and transmits UCI that needs to be transmitted on the PUCCH SCell on the PUCCH sSCell.

In some embodiments, in case that the cell carrying the uplink control message is determined to be a deactivatable cell, the method further includes:
determining that the cell associated with the cell carrying the uplink control message is a deactivatable cell; or,
updating a mapping relationship of the cell associated with the cell carrying the uplink control message; or,
mapping the cell associated with the cell carrying the uplink control message to a configured grant (CG) primary cell of a current cell group.

In an embodiment, for a PUCCH sSCell, if the corresponding PUCCH SCell has been deactivated and there is subsequent uplink transmission on the PUCCH sSCell, the PUCCH sSCell assumes all uplink control message transmission functions on the original PUCCH SCell.

In case that the PUCCH SCell/PUCCH sSCell is deactivated due to expiration of the cell deactivation timer, the SCell mapped to that PUCCH SCell/PUCCH sSCell is used to transmit uplink control messages.

In this case, the terminal may determine that the cell associated with the cell carrying the uplink control message is a deactivatable cell and deactivate the associated SCell.

The terminal may also update the mapping relationship of the cell associated with the cell carrying the uplink control message, and map the uplink transmission of the SCell to other PUCCH SCell/PUCCH sSCell.

The terminal may also map the cell associated with the cell carrying the uplink control message to a configured grant primary cell of a current cell group, that is, by default, the SCell mapped to the PUCCH SCell/PUCCH sSCell for transmitting uplink control messages is mapped to the CG primary cell of the current cell group for transmitting uplink control messages.

In some embodiments, in case that all terminals in a cell carrying an uplink control message deactivate the cell carrying the uplink control message, the network device deactivates the cell carrying the uplink control message and/or the cell associated with the cell carrying the uplink control message.

In an embodiment, the network device deactivating a cell may refer to that the network device directly shuts down the cell.

The network device deactivating a cell may also refer to that the network device shuts down part of functions of the cell.

The network device deactivating a cell may also refer to that the network device reduces the performance of the cell.

For example, if a network device determines that all terminals in a cell have deactivated the cell, the network device may shut down the cell or set the base station in energy-saving mode, such as reducing the transmission frequency of common signals or lowering the transmission frequency of SSB (i.e., the maximum SSB transmission period).

For example, the transmission frequency of common signals on the cell is reduced.

For example, the transmission period of SSB on the cell is increased, that is, the transmission frequency of SSB on the cell is reduced.

For example, the transmission period of SSB on the cell is adjusted to maximum.

In an embodiment, if there are terminals in the cell that do not support the present application, the base station needs to transmit a command of deactivating the cell to the terminal, or use a configuration command to remove the cell from the list of cells that the terminal may work on before shutting down the cell. If it is determined that a terminal has activated the cell, then the cell is activated.

In the methods for activating/deactivating cell, the terminal and the base station determine if the terminal and the base station is allowed to activate/deactivate the cell carrying the uplink control message and/or the cell associated with the cell carrying the uplink control message, without the need for explicit signaling to notify the terminal, which reduces signaling overhead, activates/deactivates the cell in a timely manner, and reduces energy consumption of the base station and the terminal.

Below are several specific examples to further explain the methods in the above embodiments.

Example 1: based on network device reconfiguration, the cell carrying the uplink control message and/or the cell associated with the cell carrying the uplink control message are activated/deactivated.

Example 1 may include the following steps.
1. The network device configures for the terminal that if the terminal is allowed to autonomously activate/deactivate the cell based on the configuration of PUCCH SCell or PUCCH sSCell.
2. The terminal receives a configuration command from the network device, and determines if the terminal is allowed to autonomously activate/deactivate the cell based on the configuration of PUCCH SCell or PUCCH sSCell.
3. The network device transmits the reconfiguration information for PUCCH SCell and/or PUCCH sSCell to the terminal.

If the network device determines that there is no information transmission from the terminal on the old PUCCH SCell/PUCCH sSCell, it is determined to deactivate the cell for the terminal; and the new PUCCH SCell/PUCCH sSCell activates the cell for the terminal.

If the network device determines that all terminals in a specific cell are in a cell deactivated state for the cell, and/or if no terminal is configured to work in the cell, the cell is shut down. On the contrary, for shut down cells, if the network device configures the shut down cells as PUCCH SCell or PUCCH sSCell, the cell is started.

4. The terminal receives the reconfiguration information for PUCCH SCell or PUCCH sSCell transmitted from the network device.

For the old PUCCH SCell/PUCCH sSCell, the terminal sets the old PUCCH SCell/PUCCH sSCell as a deactivatable cell. If there is no subsequent information transmission, the cell is deactivated; and for the new PUCCH SCell/PUCCH sSCell, the cell is activated.

Example 2: the associated SCell of the cell carrying the uplink control message is deactivated.

Example 2 may include the following steps.
1. The network device configures for the terminal that if the terminal is allowed to autonomously activate/deactivate the associated cell based on the configuration of PUCCH SCell or PUCCH sSCell.
2. The terminal receives a configuration command from the network device, and determines that if the terminal is allowed to autonomously activate/deactivate the associated cell based on the configuration of PUCCH SCell or PUCCH sSCell.
3. In an embodiment, the network device transmits an SCell activation/deactivation command to the terminal.

If the network device determines that all SCells mapped to PUCCH SCell and/or PUCCH sSCell have been deactivated, and there is no subsequent information transmission on the PUCCH SCell and/or PUCCH sSCell, then the PUCCH SCell and/or PUCCH sSCell are deactivated; if the PUCCH SCell/PUCCH sSCell is originally in a deactivated state, in case that an SCell mapped to the PUCCH SCell/PUCCH sSCell is activated, the PUCCH SCell/PUCCH sSCell is simultaneously activated.

If the network device determines that all terminals in a specific cell are in a cell deactivated state for the cell, and/or if no terminal is configured to work in the cell, the cell is shut down. On the contrary, for shut down cells, if there is SCell mapped to the PUCCH SCell and/or PUCCH sSCell being activated, the cell is started.

4. In an embodiment, the terminal receives an SCell activation/deactivation command transmitted from the network device; or, based on the running of the deactivation timer on SCell, in case that the deactivation timer expires, the cell is deactivated.

If the terminal determines that all SCells mapped to PUCCH SCell and/or PUCCH sSCell have been deactivated, and there is no subsequent information transmission on the PUCCH SCell and/or PUCCH sSCell, then the PUCCH SCell and/or PUCCH sSCell are deactivated.

In an embodiment, if the PUCCH SCell/PUCCH sSCell is in a deactivated state, in case that an SCell mapped to the PUCCH SCell/PUCCH sSCell is activated, the PUCCH SCell/PUCCH sSCell is simultaneously activated.

Example 3: PUCCH sSCell is deactivated based on PUCCH SCell.

Example 3 may include the following steps.
1. The network device configures for the terminal that if the terminal is allowed to deactivate PUCCH sSCell based on PUCCH SCell.
2. The terminal receives a configuration command from the network device, and determines that if the terminal is allowed to deactivate PUCCH sSCell based on PUCCH SCell.
3. The network device determines that the PUCCH SCell is deactivated, and then determines that the CCH sSCell is set as a deactivatable cell.

Network devices may directly deactivate the PUCCH sSCell or deactivate the PUCCH sSCell in case that it is determined that there is no subsequent information transmission on the PUCCH sSCell.

If the network device determines that, on the PUCCH sSCell, all terminals are in a cell deactivated state for the cell, and/or if no terminal is configured to work in the cell, the cell is shut down. On the contrary, for shut down cells, if an SCell mapped to the PUCCH sSCell is activated, the cell is started.

4. The terminal determines that the PUCCH SCell is deactivated and then determines that the PUCCH sSCell is set as a deactivatable cell.

The terminal may directly deactivate the PUCCH sSCell or deactivate the PUCCH sSCell in case that it is determined that there is no subsequent information transmission on the PUCCH sSCell.

In an embodiment, in case that the PUCCH sSCell is in a deactivated state and an SCell mapped to the PUCCH sSCell is activated, the PUCCH sSCell is simultaneously activated.

### Example 4: deactivate PUCCH SCell/PUCCH sSCell based on cell deactivation timer.

Example 4 may include the following steps.
1. The network device configures a cell deactivation timer for PUCCH SCell or PUCCH sSCell, and the network device does not configure periodic UCI reports (such as periodic CSI, SRS, etc.) for the terminal to transmit on the PUCCH SCell or PUCCH sSCell.
2. The terminal receives the cell deactivation timer for PUCCH SCell or PUCCH sSCell configured by the network device.
3. The network device determines whether the cell deactivation timer expires based on the uplink and downlink transmission with the terminal.

The network device determines that the cell deactivation timer for the PUCCH SCell or PUCCH sSCell expires, and deactivates the PUCCH SCell or PUCCH sSCell for the terminal.

For other SCells associated with the PUCCH SCell or PUCCH sSCell, the SCells may be deactivated, or the network device may indicate to map them to other PUCCH SCells and/or PUCCH sSCells, or the SCells may be mapped to the primary cell of the cell group by default.

If the network device determines that all terminals in a specific cell are in a cell deactivated state for the cell, and/or if no terminal is configured to work in the cell, the cell is shut down. On the contrary, for shut down cells, if there is SCell mapped to the PUCCH SCell and/or PUCCH sSCell being activated, the cell is started.

4. The terminal performs the operations of the cell deactivation timer as follows:
in case that the network device configures periodic UCI transmission (such as CSI, SRS) of the associated cell on the PUCCH SCell/PUCCH sSCell, the terminal stops (or referred to as suspends) the cell deactivation timer;
if the timer does not stop/suspend, the terminal starts the timer in case of transmitting aperiodic UCI reports (such as HARQ feedback);
in case that the timer is running, if the network device configures a periodic UCI report, the terminal stops the timer;
in case that the timer is running, if periodic UCI report is not configured but aperiodic UCI report occurs, the terminal restarts the timer; and
after the timer expires, the terminal sets the PUCCH SCell/PUCCH sSCell as a deactivatable cell.

For a deactivatable cell, the terminal may directly deactivate the cell, or further determine that there is no subsequent information transmission on the PUCCH SCell/PUCCH sSCell. If there is no subsequent information transmission, the PUCCH SCell/PUCCH sSCell is deactivated.

In case that PUCCH SCell/PUCCH sSCell is deactivated, other SCells associated with the PUCCH SCell or PUCCH sSCell may be deactivated, or the network device may indicate to map the SCells to other PUCCH SCell and/or PUCCH sSCell, or the SCells may be mapped to the primary cell of the cell group by default.

### Example 5: deactivation of PSCell.

Example 5 may include the following steps.
1. The network device configures for the terminal if the terminal is allowed to activate/deactivate PSCell (i.e., SCG).
2. The terminal receives the configuration transmitted from the network device that the terminal is allowed to activate/deactivate PSCell (i.e., SCG).
3. In case that the network device determines that all other cells of SCG have been deactivated for the terminal, and there is no information transmission or control message transmitted on PSCell, the network device determines that the terminal may deactivate SCG.

In an embodiment, the primary base station or secondary base station receives the PSCell (or SCG) deactivation message transmitted from the terminal.

In an embodiment, if the primary base station receives a PSCell (or SCG) deactivation message transmitted from the terminal, the primary base station may notify the SCG through an interface message that the terminal deactivates the SCG.

If the network device determines that all terminals on the PSCell are in a deactivated cell state for the cell and/or no terminals are configured to work in the cell, the cell is shut down.

4. In case that all other cells in SCG are deactivated, if there is no information transmission or control message transmitted on PSCell, the terminal determines that SCG may be deactivated.

In an embodiment, the terminal transmits a PSCell (or SCG) deactivation message to the primary base station or secondary base station.

Through the present application, the base station and the terminal may flexibly and quickly activate/deactivate the cell carrying the uplink control message and the cell associated with the cell carrying the uplink control message, without the need to transmit explicit signaling notification to the terminals, which reduces signaling overhead, reduces delay, and lowers energy consumption of the base station and the terminal.

FIG. 4 is a second flowchart of a method for activating/deactivating cell according to an embodiment of the present application. As shown in FIG. 4, embodiments of the present application provide a method for activating/deactivating cell, which may be performed by a network device such as a base station. The method includes the following step:
step 401: in case that all terminals in a cell carrying an uplink control message deactivate the cell carrying the uplink control message, the network device deactivates the cell carrying the uplink control message and/or a cell associated with the cell carrying the uplink control message.

In some embodiments, before deactivating the cell carrying the uplink control message and/or the cell associated with the cell carrying the uplink control message, the method further includes:
transmitting a base station configured condition to a terminal, where the base station configured condition is used to indicate the terminal to determine if the terminal is allowed to activate/deactivate the cell carrying the uplink control message and/or the cell associated with the cell carrying the uplink control message. It should be noted that the order of this step in this embodiment is only an example.

In some embodiments, the base station configured condition includes one or more of the following:
indication of the terminal being allowed to activate/deactivate a target cell of one physical uplink control channel (PUCCH) group;
indication of the terminal being allowed to activate/deactivate target cells of all PUCCH groups;
indication of the terminal being allowed to activate/deactivate an associated cell of a cell carrying the uplink control message;
indication of the terminal being allowed to activate/deactivate a PUCCH secondary cell (PUCCH SCell);
indication of the terminal being allowed to activate/deactivate a PUCCH switching secondary cell (PUCCH sSCell); or,
indication of the terminal being allowed to activate/deactivate a PUCCH SCell and a PUCCH sSCell.

In some embodiments, deactivating the cell carrying the uplink control message and/or the cell associated with the cell carrying the uplink control message includes one or more of the following:
shutting down the cell carrying the uplink control message and/or the cell associated with the cell carrying the uplink control message;
reducing a transmission frequency of a common signal on the cell carrying the uplink control message and/or the cell associated with the cell carrying the uplink control message;
reducing a transmission frequency of a synchronization signal/physical broadcast channel (PBCH) block (SSB) on the cell carrying the uplink control message and/or the cell associated with the cell carrying the uplink control message;
transmitting a common signal on the cell carrying the uplink control message and/or the cell associated with the cell carrying the uplink control message at a maximum transmission period; or,
transmitting an SSB on the cell carrying the uplink control message and/or the cell associated with the cell carrying the uplink control message at a maximum transmission period.

The method for activating/deactivating cell provided in the embodiments of the present application may refer to the embodiment of the method for activating/deactivating cell performed by a terminal, and may achieve the same technical effect. The same parts and beneficial effects as the method embodiment in this embodiment are not repeated.

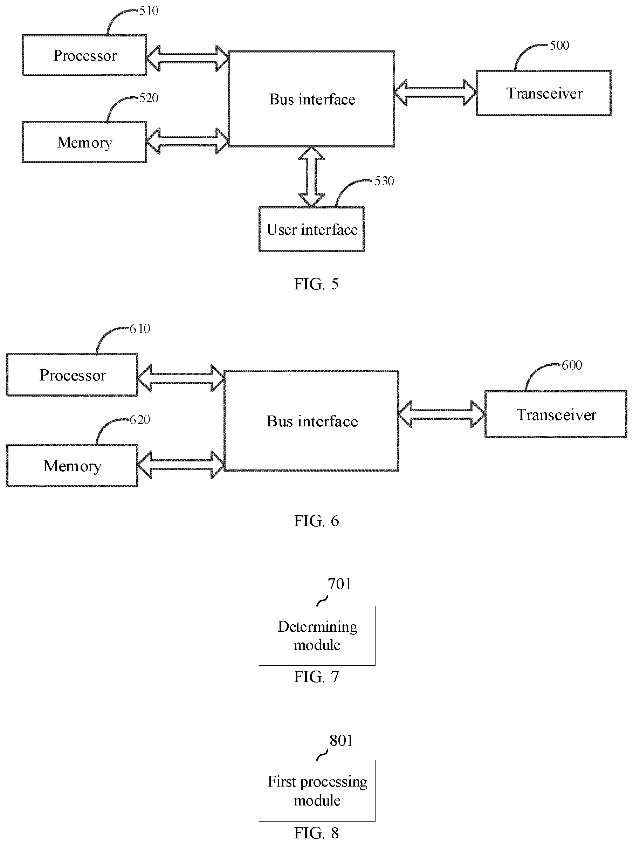

FIG. 5 is a schematic structural diagram of a terminal according to an embodiment of the present application. As shown in FIG. 5, the terminal includes a memory 520, a transceiver 500, and a processor 510, where:
the memory 520 is used for storing a computer program; the transceiver 500 is used for transmitting and receiving data under control of the processor 510; and the processor 510 is used for reading the computer program in the memory 520 and performing the following operations:
determining, based on a base station configured condition, if the terminal is allowed to activate/deactivate a cell carrying an uplink control message and/or a cell associated with the cell carrying the uplink control message.

In an embodiment, the transceiver 500 is used for transmitting and receiving data under control of the processor 510.

In FIG. 5, a bus architecture may include any number of interconnected buses and bridges, which are linked together through various circuits of one or more processors represented by the processor 510 and one or more memories represented by the memory 520. The bus architecture may also link various other circuits such as peripheral devices, voltage regulators, and power management circuits together, which are well-known in the art, and therefore are not further described in the present application. The bus interface provides an interface. The transceiver 500 may include multiple elements, i.e., including a transmitter and a receiver, units for providing communication with various other devices over transmission media including wireless channels, wired channels, fiber optic cables, and the like. For different user devices, the user interface 530 may also be an interface that may connect external and internal devices, including but not limited to keypads, displays, speakers, microphones, joysticks, etc.

The processor 510 is responsible for managing the bus architecture and general processing, and the memory 520 may store data used by the processor 510 when performing operations.

In some embodiments, processor 510 may be a central processing unit (CPU), an application specific integrated circuit (ASIC), a field-programmable gate array (FPGA), or a complex programmable logic device (CPLD), the processor may also use a multi-core architecture.

The processor calls a computer program stored in memory to perform any of the methods provided in the embodiments of the present application based on the obtained executable instruction. The processor and the memory may also be physically separated and arranged separately.

In some embodiments, the base station configured condition includes one or more of the following:
indication of the terminal being allowed to activate/deactivate a target cell of one physical uplink control channel (PUCCH) group;
indication of the terminal being allowed to activate/deactivate target cells of all PUCCH groups;
indication of the terminal being allowed to activate/deactivate an associated cell of a cell carrying the uplink control message;
indication of the terminal being allowed to activate/deactivate a PUCCH secondary cell (PUCCH SCell);
indication of the terminal being allowed to activate/deactivate a PUCCH switching secondary cell (PUCCH sSCell); or,
indication of the terminal being allowed to activate/deactivate a PUCCH SCell and a PUCCH sSCell.

In some embodiments, determining, based on the base station configured condition, if the terminal is allowed to activate/deactivate the cell carrying the uplink control message and/or the cell associated with the cell carrying the uplink control message includes:
in case that the cell carrying the uplink control message is re-configured, determining that the cell carrying the uplink control message before reconfiguration is a deactivatable cell, and the cell carrying the uplink control message after reconfiguration is an activated cell; or,
in case that all SCells transmitting uplink control information (UCI) mapped to the cell carrying the uplink control message are in a deactivated state, determining that the cell carrying the uplink control message is a deactivatable cell; or,
in case that a PUCCH SCell is in a deactivated state, determining that a cell of a PUCCH sSCell corresponding to the PUCCH SCell is a deactivatable cell; or,
in case that a target timer associated with the cell carrying the uplink control message expires, determining that the cell carrying the uplink control message is a deactivatable cell.

In some embodiments, the processor is further used for reading the computer program in the memory and performing the following operations:
deactivating the deactivatable cell.

In some embodiments, the processor is further used for reading the computer program in the memory and performing the following operations:
determining that there is no subsequent information transmission on the deactivatable cell.

In some embodiments, deactivating the deactivatable cell includes stopping one or more of the following on the deactivatable cell:
transmitting a sounding reference signal (SRS);
transmitting channel state information (CSI);
transmitting uplink data;
transmitting uplink control information;
performing random access; or,
monitoring a physical downlink control channel (PDCCH).

In some embodiments, in case that the deactivatable cell is a primary cell of a secondary base station, and the terminal has no information transmission on other cells of the secondary base station except for the primary cell, setting a secondary cell group (SCG) as a deactivatable SCG.

In some embodiments, the processor is further used for reading the computer program in the memory and performing the following operations:
deactivating the deactivatable SCG.

In some embodiments, deactivating the deactivatable SCG includes stopping one or more of the following on any cell of the deactivatable SCG:
transmitting a sounding reference signal (SRS);
transmitting channel state information (CSI);
transmitting uplink data;
transmitting uplink control information;
performing random access; or,
monitoring a physical downlink control channel (PDCCH).

In some embodiments, the processor is further used for reading the computer program in the memory and performing the following operations:
in case that the target timer is running and the terminal determines that a network device configures to transmit UCI in a periodic manner on the cell associated with the cell carrying the uplink control message, stopping the target timer; or,
in case that the target timer is running and the terminal transmits UCI in an aperiodic manner, restarting the target timer; or,
in case that the target timer is running and the terminal determines that a network device configures to transmit UCI in a periodic manner, stopping the target timer; or,
in case that the target timer is running, the terminal determines that a network device does not configure to transmit UCI in a periodic manner, and the terminal transmits UCI in an aperiodic manner, restarting the target timer.

In some embodiments, the processor is further used for reading the computer program in the memory and performing the following operations:
in case of determining that there is subsequent information transmission on the PUCCH sSCell, re-determining a cell of the PUCCH sSCell as an activated cell; and transmitting UCI that needs to be transmitted on the PUCCH SCell on the PUCCH sSCell.

In some embodiments, in case that the cell carrying the uplink control message is determined to be a deactivatable cell, the processor is further configured for reading the computer program in the memory and performing the following operations:
determining that the cell associated with the cell carrying the uplink control message is a deactivatable cell; or,
updating a mapping relationship of the cell associated with the cell carrying the uplink control message; or,
mapping the cell associated with the cell carrying the uplink control message to a configured grant primary cell of a current cell group.

In some embodiments, the cell associated with the cell carrying the uplink control message is a cell that has a mapping relationship with the cell carrying the uplink control message, and corresponding UCI is transmitted on the mapped cell carrying the uplink control message; and
the cell carrying the uplink control message includes one or more of the following:
the PSCell;
the PUCCH SCell; or,
the PUCCH sSCell.

It should be noted that the terminal provided in the embodiments of the present application may implement all the method steps implemented by the method embodiment performed by the terminal, and may achieve the same technical effects. Therefore, the same parts and beneficial effects as the method embodiment in this embodiment are not described here.

FIG. 6 is a schematic structural diagram of a network device according to an embodiment of the present application. As shown in FIG. 6, the network device includes a memory 620, a transceiver 600, and a processor 610, where:
the memory 620 is used for storing a computer program; the transceiver 600 is used for transmitting and receiving data under control of the processor 610; and the processor 610 is used for reading the computer program in the memory 620 and performing the following operations:
in case that all terminals in a cell carrying an uplink control message deactivate the cell carrying the uplink control message, deactivating the cell carrying the uplink control message and/or a cell associated with the cell carrying the uplink control message.

In an embodiment, the transceiver 600 is used for transmitting and receiving data under control of the processor 610.

In FIG. 6, a bus architecture may include any number of interconnected buses and bridges, which are linked together through various circuits of one or more processors represented by the processor 610 and one or more memories represented by the memory 620. The bus architecture may also link various other circuits such as peripheral devices, voltage regulators, and power management circuits together, which are well-known in the art, and therefore are not further described in the present application. The bus interface provides an interface. The transceiver 600 may include multiple elements, i.e., including a transmitter and a receiver, units for providing communication with various other devices over transmission media including wireless channels, wired channels, fiber optic cables, and the like. The processor 610 is responsible for managing the bus architecture and general processing, and the memory 620 may store data used by the processor 610 when performing operations.

The processor 610 may be a central processing unit (CPU), an application specific integrated circuit (ASIC), a field-programmable gate array (FPGA), or a complex programmable logic device (CPLD), the processor may also use a multi-core architecture.

In some embodiments, the processor is further used for reading the computer program in the memory and performing the following operations:
transmitting a base station configured condition to a terminal, where the base station configured condition is used to indicate the terminal to determine if the terminal is allowed to activate/deactivate the cell carrying the uplink control message and/or the cell associated with the cell carrying the uplink control message.

In some embodiments, the base station configured condition includes one or more of the following:
indication of the terminal being allowed to activate/deactivate a target cell of one physical uplink control channel (PUCCH) group;
indication of the terminal being allowed to activate/deactivate target cells of all PUCCH groups;
indication of the terminal being allowed to activate/deactivate an associated cell of a cell carrying the uplink control message;
indication of the terminal being allowed to activate/deactivate a PUCCH secondary cell (PUCCH SCell);
indication of the terminal being allowed to activate/deactivate a PUCCH switching secondary cell (PUCCH sSCell); or,
indication of the terminal being allowed to activate/deactivate a PUCCH SCell and a PUCCH sSCell.

In some embodiments, deactivating the cell carrying the uplink control message and/or the cell associated with the cell carrying the uplink control message includes one or more of the following:
shutting down the cell carrying the uplink control message and/or the cell associated with the cell carrying the uplink control message;
reducing a transmission frequency of a common signal on the cell carrying the uplink control message and/or the cell associated with the cell carrying the uplink control message;
reducing a transmission frequency of a synchronization signal/physical broadcast channel (PBCH) block (SSB) on the cell carrying the uplink control message and/or the cell associated with the cell carrying the uplink control message;
transmitting a common signal on the cell carrying the uplink control message and/or the cell associated with the cell carrying the uplink control message at a maximum transmission period; or,
transmitting an SSB on the cell carrying the uplink control message and/or the cell associated with the cell carrying the uplink control message at a maximum transmission period.

In an embodiment, the above-mentioned network device provided in the embodiments of the present application may achieve all the method steps implemented by the method embodiment performed by the network device, and may achieve the same technical effects. Therefore, the same parts and beneficial effects as the method embodiment in this embodiment are not described here.

FIG. 7 is a first structural diagram of an apparatus for activating/deactivating cell according to an embodiment of the present application. As shown in FIG. 7, embodiments of the present application provide an apparatus for activating/deactivating cell, including a determining module 701, where:
the determining module 701 is used for determining, based on a base station configured condition, if a terminal is allowed to activate/deactivate a cell carrying an uplink control message and/or a cell associated with the cell carrying the uplink control message.

In some embodiments, the base station configured condition includes one or more of the following:
indication of the terminal being allowed to activate/deactivate a target cell of one physical uplink control channel (PUCCH) group;
indication of the terminal being allowed to activate/deactivate target cells of all PUCCH groups;
indication of the terminal being allowed to activate/deactivate an associated cell of a cell carrying the uplink control message;
indication of the terminal being allowed to activate/deactivate a PUCCH secondary cell (PUCCH SCell);
indication of the terminal being allowed to activate/deactivate a PUCCH switching secondary cell (PUCCH sSCell); or,
indication of the terminal being allowed to activate/deactivate a PUCCH SCell and a PUCCH sSCell.

In some embodiments, the determining module is used for:
in case that the cell carrying the uplink control message is re-configured, determining that the cell carrying the uplink control message before reconfiguration is a deactivatable cell, and the cell carrying the uplink control message after reconfiguration is an activated cell; or,
in case that all SCells transmitting uplink control information (UCI) mapped to the cell carrying the uplink control message are in a deactivated state, determining that the cell carrying the uplink control message is a deactivatable cell; or,
in case that a PUCCH SCell is in a deactivated state, determining that a cell of a PUCCH sSCell corresponding to the PUCCH SCell is a deactivatable cell; or,
in case that a target timer associated with the cell carrying the uplink control message expires, determining that the cell carrying the uplink control message is a deactivatable cell.

In some embodiments, the apparatus further includes a first deactivating module, where
the first deactivating module is used for deactivating the deactivatable cell.

In some embodiments, the apparatus further includes a first determining module, where
the first determining module is used for determining that there is no subsequent information transmission on the deactivatable cell.

In some embodiments, the first deactivating module is used for stopping one or more of the following on the deactivatable cell:
transmitting a sounding reference signal (SRS);
transmitting channel state information (CSI);
transmitting uplink data;
transmitting uplink control information;
performing random access; or,
monitoring a physical downlink control channel (PDCCH).

In some embodiments, in case that the deactivatable cell is a primary cell of a secondary base station, and the terminal has no information transmission on other cells of the secondary base station except for the primary cell, the apparatus further includes a first setting module; and the first setting module is used for setting a secondary cell group (SCG) as a deactivatable SCG.

In some embodiments, the apparatus further includes a second deactivating module, where
the second deactivating module is used for deactivating the deactivatable SCG.

In some embodiments, the second deactivating module is used for stopping one or more of the following on any cell of the deactivatable SCG:
transmitting a sounding reference signal (SRS);
transmitting channel state information (CSI);
transmitting uplink data;
transmitting uplink control information;
performing random access; or,
monitoring a physical downlink control channel (PDCCH).

In some embodiments, the apparatus further includes a second processing module, where the second processing module is used for:
in case that the target timer is running and the terminal determines that a network device configures to transmit UCI in a periodic manner on the cell associated with the cell carrying the uplink control message, stopping the target timer; or,
in case that the target timer is running and the terminal transmits UCI in an aperiodic manner, restarting the target timer; or,
in case that the target timer is running and the terminal determines that a network device configures to transmit UCI in a periodic manner, stopping the target timer; or,
in case that the target timer is running, the terminal determines that a network device does not configure to transmit UCI in a periodic manner, and the terminal transmits UCI in an aperiodic manner, restarting the target timer.

In some embodiments, the apparatus further includes an updating module, where the updating module is used for:
in case of determining that there is subsequent information transmission on the PUCCH sSCell, re-determining a cell of the PUCCH sSCell as an activated cell; and transmitting UCI that needs to be transmitted on the PUCCH SCell on the PUCCH sSCell.

In some embodiments, in case that the cell carrying the uplink control message is determined to be a deactivatable cell, the apparatus further includes a third processing module, where the third processing module is used for:
determining that the cell associated with the cell carrying the uplink control message is a deactivatable cell; or,
updating a mapping relationship of the cell associated with the cell carrying the uplink control message; or,
mapping the cell associated with the cell carrying the uplink control message to a configured grant primary cell of a current cell group.

In some embodiments, the cell associated with the cell carrying the uplink control message is a cell that has a mapping relationship with the cell carrying the uplink control message, and corresponding UCI is transmitted on the mapped cell carrying the uplink control message; and
the cell carrying the uplink control message includes one or more of the following:
the PSCell;
the PUCCH SCell; or,
the PUCCH sSCell.

In an embodiment, the apparatus for activating/deactivating cell provided in the embodiments of the present application may achieve all the method steps implemented by the method embodiment performed by the terminal, and may achieve the same technical effect. Therefore, the same parts and beneficial effects as the method embodiment in this embodiment are not described here.

FIG. 8 is a second structural diagram of an apparatus for activating/deactivating cell according to an embodiment of the present application. As shown in FIG. 8, embodiments of the present application provide an apparatus for activating/deactivating cell, including a first processing module 801, where the first processing module is used for:
in case that all terminals in a cell carrying an uplink control message deactivate the cell carrying the uplink control message, deactivating the cell carrying the uplink control message and/or a cell associated with the cell carrying the uplink control message.

In some embodiments, the apparatus further includes a configuring module, where:
the configuring module is used for transmitting a base station configured condition to a terminal, where the base station configured condition is used to indicate the terminal to determine if the terminal is allowed to activate/deactivate the cell carrying the uplink control message and/or the cell associated with the cell carrying the uplink control message.

In some embodiments, the base station configured condition includes one or more of the following:
indication of the terminal being allowed to activate/deactivate a target cell of one physical uplink control channel (PUCCH) group;
indication of the terminal being allowed to activate/deactivate target cells of all PUCCH groups;
indication of the terminal being allowed to activate/deactivate an associated cell of a cell carrying the uplink control message;
indication of the terminal being allowed to activate/deactivate a PUCCH secondary cell (PUCCH SCell);
indication of the terminal being allowed to activate/deactivate a PUCCH switching secondary cell (PUCCH sSCell); or,
indication of the terminal being allowed to activate/deactivate a PUCCH SCell and a PUCCH sSCell.

In some embodiments, deactivating the cell carrying the uplink control message and/or the cell associated with the cell carrying the uplink control message includes one or more of the following:
shutting down the cell carrying the uplink control message and/or the cell associated with the cell carrying the uplink control message;
reducing a transmission frequency of a common signal on the cell carrying the uplink control message and/or the cell associated with the cell carrying the uplink control message;
reducing a transmission frequency of a synchronization signal/physical broadcast channel (PBCH) block (SSB) on the cell carrying the uplink control message and/or the cell associated with the cell carrying the uplink control message;
transmitting a common signal on the cell carrying the uplink control message and/or the cell associated with the cell carrying the uplink control message at a maximum transmission period; or,
transmitting an SSB on the cell carrying the uplink control message and/or the cell associated with the cell carrying the uplink control message at a maximum transmission period.

In an embodiment, the apparatus for activating/deactivating cell provided in the embodiments of the present application may achieve all the method steps implemented by the method embodiment performed by the network device, and may achieve the same technical effect. Therefore, the same parts and beneficial effects as the method embodiment in this embodiment are not described here.

It should be noted that the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

In case that the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a USB flash disk, a mobile hard disk, a read-only memory (ROM), a random access memory (RAM), a magnetic disk, or a compact disk.

In some embodiments, a computer-readable storage medium is further provided, which stores a computer program for causing a computer to perform the methods for activating/deactivating cell provided by the above method embodiments.

In an embodiment, the computer-readable storage medium provided in the embodiments of the present application may implement all the method steps implemented in the above method embodiments and achieve the same technical effects. Therefore, the same parts and beneficial effects as the method embodiments in this embodiment are not described here.

It should be noted that: the computer-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

Additionally, it should be noted that the terms "first", "second", etc. in the embodiments of the present application are used to distinguish similar objects and are not used to describe a specific order or sequence. It should be understood that the terms used in this way may be interchanged in appropriate circumstances, so that the embodiments of the present application may be implemented in order other than those illustrated or described herein, and the objects distinguished by "first" and "second" are usually of the same class, without limiting the quantity of objects, for example, a first object may be one or more.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions provided in embodiments of the present application may be applied in various systems, especially a 5G system. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

The phrase "determining B based on A" in the present application means that the factor A should be considered when determining B. Not limited to "determining B based solely on A", it should also include "determining B based on A and C", "determining B based on A, C, and E", "determining C based on A, and further determine B based on C" etc. In addition, it may also include using A as a condition for determining B, for example, "when A satisfies a first condition, using a first method to determine B"; for another example, "in case that A satisfies a second condition, determining B" and so on; for yet another example, "in case that A satisfies a third condition, determining B based on a first parameter" and so on. A may also be used as a condition for determining B, such as "in case that A satisfies the first condition, using the first method to determine C, and further determining B based on C", etc.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and quantity of antenna combinations, MIMO transmission may be 2D-MIMO, 3D-MIMO, FD-MIMO, or massive-MIMO, and may also be diversity transmission, precoding transmission, or beamforming transmission.

As is appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for activating/deactivating cell, performed by a terminal, comprising:
determining, based on a base station configured condition, if the terminal is allowed to activate/deactivate a cell carrying an uplink control message and/or a cell associated with the cell carrying the uplink control message.

2. The method for activating/deactivating cell of claim 1, wherein the base station configured condition comprises one or more of the following:
indication of the terminal being allowed to activate/deactivate a target cell for one physical uplink control channel (PUCCH) group;
indication of the terminal being allowed to activate/deactivate target cells for all PUCCH groups;
indication of the terminal being allowed to activate/deactivate an associated cell of a cell carrying the uplink control message;
indication of the terminal being allowed to activate/deactivate a PUCCH secondary cell (PUCCH SCell);
indication of the terminal being allowed to activate/deactivate a PUCCH switching secondary cell (PUCCH sSCell); or,
indication of the terminal being allowed to activate/deactivate a PUCCH SCell and a PUCCH sSCell.

3. The method for activating/deactivating cell of claim 1, wherein determining, based on the base station configured condition, if the terminal is allowed to activate/deactivate the cell carrying the uplink control message and/or the cell associated with the cell carrying the uplink control message comprises:
in case that the cell carrying the uplink control message is re-configured, determining that the cell carrying the uplink control message before reconfiguration is a deactivatable cell, and the cell carrying the uplink control message after reconfiguration is an activated cell; or,
in case that all SCells transmitting uplink control information (UCI) mapped to the cell carrying the uplink control message are in a deactivated state, determining that the cell carrying the uplink control message is a deactivatable cell; or,
in case that a PUCCH SCell is in a deactivated state, determining that a cell for a PUCCH sSCell corresponding to the PUCCH SCell is a deactivatable cell; or,
in case that a target timer associated with the cell carrying the uplink control message expires, determining that the cell carrying the uplink control message is a deactivatable cell.

4. The method for activating/deactivating cell of claim 3, wherein the method further comprises:
deactivating the deactivatable cell.

5. The method for activating/deactivating cell of claim 4, wherein the method further comprises:
determining that there is no subsequent information transmission on the deactivatable cell.

6. The method for activating/deactivating cell of claim 4, wherein deactivating the deactivatable cell comprises stopping one or more of the following on the deactivatable cell:
transmitting a sounding reference signal (SRS);
transmitting channel state information (CSI);
transmitting uplink data;
transmitting uplink control information;
performing random access; or,
monitoring a physical downlink control channel (PDCCH).

7. The method for activating/deactivating cell of claim 3, wherein in case that the deactivatable cell is a primary cell of a secondary base station, and the terminal has no information transmission on other cells of the secondary base station except for the primary cell, setting a secondary cell group (SCG) as a deactivatable SCG.

8. The method for activating/deactivating cell of claim 7, wherein the method further comprises:
deactivating the deactivatable SCG.

9. The method for activating/deactivating cell of claim 8, wherein deactivating the deactivatable SCG comprises stopping one or more of the following on any cell of the deactivatable SCG:
transmitting a sounding reference signal (SRS);
transmitting channel state information (CSI);
transmitting uplink data;
transmitting uplink control information;
performing random access; or,
monitoring a physical downlink control channel (PDCCH).

10. The method for activating/deactivating cell of claim 3, wherein the method further comprises:
in case that the target timer is running and the terminal determines that a network device configures to transmit UCI in a periodic manner on the cell associated with the cell carrying the uplink control message, stopping the target timer; or,
in case that the target timer is running and the terminal transmits UCI in an aperiodic manner, restarting the target timer; or,
in case that the target timer is running and the terminal determines that a network device configures to transmit UCI in a periodic manner, stopping the target timer; or,
in case that the target timer is running, the terminal determines that a network device does not configure to transmit UCI in a periodic manner, and the terminal transmits UCI in an aperiodic manner, restarting the target timer.

11. The method for activating/deactivating cell of claim 3, wherein the method further comprises:
in case of determining that there is subsequent information transmission on the PUCCH sSCell, re-determining a cell of the PUCCH sSCell as an activated cell; and transmitting UCI that needs to be transmitted on the PUCCH SCell on the PUCCH sSCell.

12. The method for activating/deactivating cell of claim 3, wherein in case that the cell carrying the uplink control message is determined to be a deactivatable cell, the method further comprises:
determining that the cell associated with the cell carrying the uplink control message is a deactivatable cell; or,
updating a mapping relationship of the cell associated with the cell carrying the uplink control message; or,
mapping the cell associated with the cell carrying the uplink control message to a primary cell of a current cell group.

13. The method for activating/deactivating cell of any of claims 1 to 12, wherein the cell associated with the cell carrying the uplink control message is a cell that has a mapping relationship with the cell carrying the uplink control message, and corresponding UCI is transmitted on the mapped cell carrying the uplink control message; and
the cell carrying the uplink control message comprises one or more of the following:
the PSCell;
the PUCCH SCell; or,
the PUCCH sSCell.

14. A method for activating/deactivating cell, performed by a network device, comprising:
in case that all terminals in a cell carrying an uplink control message deactivate the cell carrying the uplink control message, deactivating the cell carrying the uplink control message and/or a cell associated with the cell carrying the uplink control message.

15. The method for activating/deactivating cell of claim 14, wherein the method further comprises:
transmitting a base station configured condition to a terminal, wherein the base station configured condition is used to indicate the terminal to determine if the terminal is allowed to activate/deactivate the cell carrying the uplink control message and/or the cell associated with the cell carrying the uplink control message.

16. The method for activating/deactivating cell of claim 15, wherein the base station configured condition comprises one or more of the following:
indication of the terminal being allowed to activate/deactivate a target cell for one physical uplink control channel (PUCCH) group;
indication of the terminal being allowed to activate/deactivate target cells for all PUCCH groups;
indication of the terminal being allowed to activate/deactivate an associated cell of a cell carrying the uplink control message;
indication of the terminal being allowed to activate/deactivate a PUCCH secondary cell (PUCCH SCell);
indication of the terminal being allowed to activate/deactivate a PUCCH switching secondary cell (PUCCH sSCell); or,
indication of the terminal being allowed to activate/deactivate a PUCCH SCell and a PUCCH sSCell.

17. The method for activating/deactivating cell of claim 14, wherein deactivating the cell carrying the uplink control message and/or the cell associated with the cell carrying the uplink control message comprises one or more of the following:
shutting down the cell carrying the uplink control message and/or the cell associated with the cell carrying the uplink control message;
reducing a transmission frequency of a common signal on the cell carrying the uplink control message and/or the cell associated with the cell carrying the uplink control message;
reducing a transmission frequency of a synchronization signal/physical broadcast channel (PBCH) block (SSB) on the cell carrying the uplink control message and/or the cell associated with the cell carrying the uplink control message;
transmitting a common signal on the cell carrying the uplink control message and/or the cell associated with the cell carrying the uplink control message at a maximum transmission period; or,
transmitting an SSB on the cell carrying the uplink control message and/or the cell associated with the cell carrying the uplink control message at a maximum transmission period.

18. A terminal, comprising a memory, a transceiver, and a processor, wherein
the memory is used for storing a computer program; the transceiver is used for receiving and transmitting data under control of the processor; and the processor is used for reading the computer program in the memory and performing the following operations:
determining, based on a base station configured condition, if it is allowed to activate/deactivate a cell carrying an uplink control message and/or a cell associated with the cell carrying the uplink control message.

19. The terminal of claim 18, wherein the base station configured condition comprises one or more of the following:
indication of the terminal being allowed to activate/deactivate a target cell for one physical uplink control channel (PUCCH) group;
indication of the terminal being allowed to activate/deactivate target cells for all PUCCH groups;
indication of the terminal being allowed to activate/deactivate an associated cell of a cell carrying the uplink control message;
indication of the terminal being allowed to activate/deactivate a PUCCH secondary cell (PUCCH SCell);
indication of the terminal being allowed to activate/deactivate a PUCCH switching secondary cell (PUCCH sSCell); or,
indication of the terminal being allowed to activate/deactivate a PUCCH SCell and a PUCCH sSCell.

20. The terminal of claim 18, wherein determining, based on the base station configured condition, if it is allowed to activate/deactivate the cell carrying the uplink control message and/or the cell associated with the cell carrying the uplink control message comprises:
in case that the cell carrying the uplink control message is re-configured, determining that the cell carrying the uplink control message before reconfiguration is a deactivatable cell, and the cell carrying the uplink control message after reconfiguration is an activated cell; or,
in case that all SCells transmitting uplink control information (UCI) mapped to the cell carrying the uplink control message are in a deactivated state, determining that the cell carrying the uplink control message is a deactivatable cell; or,
in case that a PUCCH SCell is in a deactivated state, determining that a cell for a PUCCH sSCell corresponding to the PUCCH SCell is a deactivatable cell; or,
in case that a target timer associated with the cell carrying the uplink control message expires, determining that the cell carrying the uplink control message is a deactivatable cell.

21. The terminal of claim 20, wherein the processor is further used for reading the computer program in the memory and performing the following operations:
deactivating the deactivatable cell.

22. The terminal of claim 21, wherein the processor is further used for reading the computer program in the memory and performing the following operations:
determining that there is no subsequent information transmission on the deactivatable cell.

23. The terminal of claim 21, wherein deactivating the deactivatable cell comprises stopping one or more of the following on the deactivatable cell:
transmitting a sounding reference signal (SRS);
transmitting channel state information (CSI);
transmitting uplink data;
transmitting uplink control information;
performing random access; or,
monitoring a physical downlink control channel (PDCCH).

24. The terminal of claim 20, wherein in case that the deactivatable cell is a primary cell of a secondary base station, and there is no information transmission on other cells of the secondary base station except for the primary cell, setting a secondary cell group (SCG) as a deactivatable SCG.

25. The terminal of claim 24, wherein the processor is further used for reading the computer program in the memory and performing the following operations:
deactivating the deactivatable SCG.

26. The terminal of claim 25, wherein deactivating the deactivatable SCG comprises stopping one or more of the following on any cell of the deactivatable SCG:
transmitting a sounding reference signal (SRS);
transmitting channel state information (CSI);
transmitting uplink data;
transmitting uplink control information;
performing random access; or,
monitoring a physical downlink control channel (PDCCH).

27. The terminal of claim 20, wherein the processor is further used for reading the computer program in the memory and performing the following operations:
in case that the target timer is running and it is determined that a network device configures to transmit UCI in a periodic manner on the cell associated with the cell carrying the uplink control message, stopping the target timer; or,
in case that the target timer is running and UCI is transmitted in an aperiodic manner, restarting the target timer; or,
in case that the target timer is running and it is determined that a network device configures to transmit UCI in a periodic manner, stopping the target timer; or,
in case that the target timer is running, it is determined that a network device does not configure to transmit UCI in a periodic manner, and UCI is transmitted in an aperiodic manner, restarting the target timer.

28. The terminal of claim 20, wherein the processor is further used for reading the computer program in the memory and performing the following operations:
in case of determining that there is subsequent information transmission on the PUCCH sSCell, re-determining a cell of the PUCCH sSCell as an activated cell; and transmitting UCI that needs to be transmitted on the PUCCH SCell on the PUCCH sSCell.

29. The terminal of claim 20, wherein in case that the cell carrying the uplink control message is determined to be a deactivatable cell, the processor is further configured for reading the computer program in the memory and performing the following operations:
determining that the cell associated with the cell carrying the uplink control message is a deactivatable cell; or,
updating a mapping relationship of the cell associated with the cell carrying the uplink control message; or,
mapping the cell associated with the cell carrying the uplink control message to a configured grant primary cell of a current cell group.

30. The terminal of any of claims 18 to 29, wherein the cell associated with the cell carrying the uplink control message is a cell that has a mapping relationship with the cell carrying the uplink control message, and corresponding UCI is transmitted on the mapped cell carrying the uplink control message; and
the cell carrying the uplink control message comprises one or more of the following:
the PSCell;
the PUCCH SCell; or,
the PUCCH sSCell.

31. A network device, comprising a memory, a transceiver, and a processor, wherein:
the memory is used for storing a computer program; the transceiver is used for receiving and transmitting data under control of the processor; and the processor is used for reading the computer program in the memory and performing the following operations:
in case that all terminals in a cell carrying an uplink control message deactivate the cell carrying the uplink control message, deactivating the cell carrying the uplink control message and/or a cell associated with the cell carrying the uplink control message.

32. The network device of claim 31, wherein the processor is further configured for reading the computer program in the memory and performing the following operations:
transmitting a base station configured condition to a terminal, wherein the base station configured condition is used to indicate the terminal to determine if the terminal is allowed to activate/deactivate the cell carrying the uplink control message and/or the cell associated with the cell carrying the uplink control message.

33. The network device of claim 32, wherein the base station configured condition comprises one or more of the following:
indication of the terminal being allowed to activate/deactivate a target cell for one physical uplink control channel (PUCCH) group;
indication of the terminal being allowed to activate/deactivate target cells for all PUCCH groups;
indication of the terminal being allowed to activate/deactivate an associated cell of a cell carrying the uplink control message;
indication of the terminal being allowed to activate/deactivate a PUCCH secondary cell (PUCCH SCell);
indication of the terminal being allowed to activate/deactivate a PUCCH switching secondary cell (PUCCH sSCell); or,
indication of the terminal being allowed to activate/deactivate a PUCCH SCell and a PUCCH sSCell.

34. The network device of claim 31, wherein deactivating the cell carrying the uplink control message and/or the cell associated with the cell carrying the uplink control message comprises one or more of the following:
shutting down the cell carrying the uplink control message and/or the cell associated with the cell carrying the uplink control message;
reducing a transmission frequency of a common signal on the cell carrying the uplink control message and/or the cell associated with the cell carrying the uplink control message;
reducing a transmission frequency of a synchronization signal/physical broadcast channel (PBCH) block (SSB) on the cell carrying the uplink control message and/or the cell associated with the cell carrying the uplink control message;
transmitting a common signal on the cell carrying the uplink control message and/or the cell associated with the cell carrying the uplink control message at a maximum transmission period; or,
transmitting an SSB on the cell carrying the uplink control message and/or the cell associated with the cell carrying the uplink control message at a maximum transmission period.

35. An apparatus for activating/deactivating cell, comprising:
a determining module, used for determining, based on a base station configured condition, if it is allowed to activate/deactivate a cell carrying an uplink control message and/or a cell associated with the cell carrying the uplink control message.

36. The apparatus for activating/deactivating cell of claim 35, wherein the base station configured condition comprises one or more of the following:
indicating that a terminal is allowed to activate/deactivate a target cell for one physical uplink control channel (PUCCH) group;
indicating that a terminal is allowed to activate/deactivate target cells for all PUCCH groups;
indicating that a terminal is allowed to activate/deactivate the cell associated with the cell carrying the uplink control message;
indicating that a terminal is allowed to activate/deactivate a PUCCH secondary cell (PUCCH SCell);
indicating that a terminal is allowed to activate/deactivate a PUCCH switching secondary cell (PUCCH sSCell); or,
indicating that a terminal is allowed to activate/deactivate a PUCCH SCell and a PUCCH sSCell.

37. The apparatus for activating/deactivating cell of claim 35, wherein the determining module is used for:
in case that the cell carrying the uplink control message is re-configured, determining that the cell carrying the uplink control message before reconfiguration is a deactivatable cell, and the cell carrying the uplink control message after reconfiguration is an activated cell; or,
in case that all SCells transmitting uplink control information (UCI) mapped to the cell carrying the uplink control message are in a deactivated state, determining that the cell carrying the uplink control message is a deactivatable cell; or,
in case that a PUCCH SCell is in a deactivated state, determining that a cell for a PUCCH sSCell corresponding to the PUCCH SCell is a deactivatable cell; or,
in case that a target timer associated with the cell carrying the uplink control message expires, determining that the cell carrying the uplink control message is a deactivatable cell.

38. The apparatus for activating/deactivating cell of claim 37, further comprising a first deactivating module, wherein:
the first deactivating module is used for deactivating the deactivatable cell.

39. The apparatus for activating/deactivating cell of claim 38, further comprising a first determining module, wherein:
the first determining module is used for determining that there is no subsequent information transmission on the deactivatable cell.

40. The apparatus for activating/deactivating cell of claim 38, wherein the first deactivating module is used for stopping one or more of the following on the deactivatable cell:
transmitting a sounding reference signal (SRS);
transmitting channel state information (CSI);
transmitting uplink data;
transmitting uplink control information;
performing random access; or,
monitoring a physical downlink control channel (PDCCH).

41. The apparatus for activating/deactivating cell of claim 37, wherein in case that the deactivatable cell is a primary cell of a secondary base station, and there is no information transmission on other cells of the secondary base station except for the primary cell, the apparatus further comprises a first setting module; and the first setting module is used for setting a secondary cell group (SCG) as a deactivatable SCG.

42. The apparatus for activating/deactivating cell of claim 41, further comprising a second deactivating module, wherein:
the second deactivating module is used for deactivating the deactivatable SCG.

43. The apparatus for activating/deactivating cell of claim 42, wherein the second deactivating module is used for stopping one or more of the following on any cell of the deactivatable SCG:
transmitting a sounding reference signal (SRS);
transmitting channel state information (CSI);
transmitting uplink data;
transmitting uplink control information;
performing random access; or,
monitoring a physical downlink control channel (PDCCH).

44. The apparatus for activating/deactivating cell of claim 37, further comprising a second processing module, wherein the second processing module is used for:
in case that the target timer is running and it is determined that a network device configures to transmit UCI in a periodic manner on the cell associated with the cell carrying the uplink control message, stopping the target timer; or,
in case that the target timer is running and UCI is transmitted in an aperiodic manner, restarting the target timer; or,
in case that the target timer is running and it is determined that a network device configures to transmit UCI in a periodic manner, stopping the target timer; or,
in case that the target timer is running, it is determined that a network device does not configure to transmit UCI in a periodic manner, and UCI is transmitted in an aperiodic manner, restarting the target timer.

45. The apparatus for activating/deactivating cell of claim 37, further comprising an updating module, wherein the updating module is used for:
in case of determining that there is subsequent information transmission on the PUCCH sSCell, re-determining a cell of the PUCCH sSCell as an activated cell; and transmitting UCI that needs to be transmitted on the PUCCH SCell on the PUCCH sSCell.

46. The apparatus for activating/deactivating cell of claim 37, wherein in case that the cell carrying the uplink control message is determined to be a deactivatable cell, the apparatus further comprises a third processing module, wherein the third processing module is used for:
determining that the cell associated with the cell carrying the uplink control message is a deactivatable cell; or,
updating a mapping relationship of the cell associated with the cell carrying the uplink control message; or,
mapping the cell associated with the cell carrying the uplink control message to a configured grant primary cell of a current cell group.

47. The apparatus for activating/deactivating cell of any of claims 35 to 46, wherein the cell associated with the cell carrying the uplink control message is a cell that has a mapping relationship with the cell carrying the uplink control message, and corresponding UCI is transmitted on the mapped cell carrying the uplink control message; and
the cell carrying the uplink control message comprises one or more of the following:
the PSCell;
the PUCCH SCell; or,
the PUCCH sSCell.

48. An apparatus for activating/deactivating cell, comprising a first processing module, wherein the first processing module is used for:
in case that all terminals in a cell carrying an uplink control message deactivate the cell carrying the uplink control message, deactivating the cell carrying the uplink control message and/or a cell associated with the cell carrying the uplink control message.

49. The apparatus for activating/deactivating cell of claim 48, further comprising a configuring module, wherein:
the configuring module is used for transmitting a base station configured condition to a terminal, wherein the base station configured condition is used to indicate the terminal to determine if the terminal is allowed to activate/deactivate the cell carrying the uplink control message and/or the cell associated with the cell carrying the uplink control message.

50. The apparatus for activating/deactivating cell of claim 49, wherein the base station configured condition comprises one or more of the following:
indication of the terminal being allowed to activate/deactivate a target cell for one physical uplink control channel (PUCCH) group;
indication of the terminal being allowed to activate/deactivate target cells for all PUCCH groups;
indication of the terminal being allowed to activate/deactivate an associated cell of a cell carrying the uplink control message;
indication of the terminal being allowed to activate/deactivate a PUCCH secondary cell (PUCCH SCell);
indication of the terminal being allowed to activate/deactivate a PUCCH switching secondary cell (PUCCH sSCell); or,
indication of the terminal being allowed to activate/deactivate a PUCCH SCell and a PUCCH sSCell.

51. The apparatus for activating/deactivating cell of claim 48, wherein deactivating the cell carrying the uplink control message and/or the cell associated with the cell carrying the uplink control message comprises one or more of the following:
shutting down the cell carrying the uplink control message and/or the cell associated with the cell carrying the uplink control message;
reducing a transmission frequency of a common signal on the cell carrying the uplink control message and/or the cell associated with the cell carrying the uplink control message;
reducing a transmission frequency of a synchronization signal/physical broadcast channel (PBCH) block (SSB) on the cell carrying the uplink control message and/or the cell associated with the cell carrying the uplink control message;
transmitting a common signal on the cell carrying the uplink control message and/or the cell associated with the cell carrying the uplink control message at a maximum transmission period; or,
transmitting an SSB on the cell carrying the uplink control message and/or the cell associated with the cell carrying the uplink control message at a maximum transmission period.

52. A computer-readable storage medium storing a computer program, wherein the computer program is used for causing a computer to perform any of the methods for activating/deactivating cell of claims 1 to 13.

53. A computer-readable storage medium storing a computer program, wherein the computer program is used for causing a computer to perform any of the methods for activating/deactivating cell of claims 14 to 17.
